# EUROPEAN PATENT APPLICATION

(11) **EP 4 755 759 A1**
(43) Date of publication of application: **10.06.2026**
(21) Application number: 25192705.9
(22) Date of filing: 30.07.2025
(51) Int. Cl.: B62D 5/00, B62D 5/04, B62D 1/16

(54) **STEER-BY-WIRE COLUMN, STEER-BY-WIRE SYSTEM, AND VEHICLE**

(30) Priority: 03.12.2024 CN 202411768008
(71) Applicant: Xiaomi EV Technology Co., Ltd., Beijing 100176 (CN)
(72) Inventor: ZHAO, Xinfu, Beijing, 100176 (CN)
(74) Representative: Stöckeler, Ferdinand

(57) **Abstract**

The present invention relates to a steer-by-wire column, a steer-by-wire system, and a vehicle. The steer-by-wire column includes a steering column, a feedback actuator (3), a controller (4), and an angle limiting mechanism. The steering column includes a column housing and a column rotating shaft rotatably arranged in the column housing. An output shaft of the feedback actuator (3) is connected to the column rotating shaft in a transmission manner. The angle limiting mechanism includes a guider (51), a cover (52), and a limiting pin (53). The feedback actuator (3) or the column rotating shaft is configured to drive the guider (51) to rotate, causing the limiting pin (53) to move between a first limit position (P1) and a second limit position (P2) to limit a rotation angle of the steering wheel.

## Description

### TECHNICAL FIELD

The present invention relates to the technical field of vehicle steering systems, and particularly relates to a steer-by-wire column, a steer-by-wire system, and a vehicle.

### BACKGROUND OF THE INVENTION

In a steer-by-wire system, because no intermediate shaft is mechanically connected between a steering column in a cab and a steering gear in a chassis, they interact with each other through communication connection. Without the limitation of a mechanical connection of a traditional steering column, the steering column can rotate indefinitely, and has no function of limiting a rotation angle. If road feel information is not transmitted in time, possible danger will be caused.

### SUMMARY OF THE INVENTION

The invention is set out in the appended set of claims.

In order to solve the problems in the related art, the present invention provides a steer-by-wire column, a steer-by-wire system, and a vehicle.

A first aspect of embodiments of the present invention provides a steer-by-wire column. The steer-by-wire column includes:
a steering column including a column housing and a column rotating shaft rotatably arranged in the column housing, where a first end of the column rotating shaft is configured to be connected to a steering wheel;
a feedback actuator, where an output shaft of the feedback actuator is connected to the column rotating shaft in a transmission manner, and the column housing is on an end surface of the feedback actuator;
a controller connected to the feedback actuator and a steering gear of a vehicle separately; and
an angle limiting mechanism including a guider arranged in the column housing, a cover arranged on the column housing, and a limiting pin, where the guider is rotatably connected between the output shaft and a second end of the column rotating shaft, one end of the limiting pin is in a guiding track of the guider, the other end of the limiting pin is movably mounted on the cover, the feedback actuator or the column rotating shaft is configured to drive the guider to rotate, causing the limiting pin to move between a first limit position and a second limit position to limit a rotation angle of the steering wheel.

Optionally, the guiding track is a spiral track arranged on an outer peripheral wall of the guider. A rotation direction of the spiral track is around an axial direction of the column rotating shaft. Two ends of the spiral track are the first limit position and the second limit position, respectively.

Optionally, the cover is provided with a guiding recess. One end of the limiting pin is provided with a stop slider. The stop slider is slidably arranged in the guiding recess. An extension direction of the guiding recess is in parallel with the axial direction of the column rotating shaft.

Optionally, the column rotating shaft includes a first transmission shaft and a second transmission shaft connected to each other. The steering column further includes a column sleeve connected to the column housing.

The column sleeve is sleeved on the first transmission shaft by a first bearing, enabling the first transmission shaft to rotate relative to the column sleeve.

The column sleeve is sleeved on the second transmission shaft by a second bearing, enabling the second transmission shaft to rotate relative to the column sleeve.

Optionally, an outer wall of the first transmission shaft is provided with a stop part. The first bearing is fixedly arranged between a matching end of the column sleeve and the stop part. And/or, the second bearing is sleeved on an outer peripheral wall of the second transmission shaft and is fixed by a clamp ring.

Optionally, an end of the first transmission shaft extends out of the column sleeve to form the first end. An end of the second transmission shaft farther from the first transmission shaft is formed into the second end. A connection end of the first transmission shaft farther from the first end is provided with an expansion section. A connection end of the second transmission shaft farther from the second end is pressed into the expansion section in an interference manner.

Optionally, the steering column includes a torsion bar. The torsion bar is provided with a first connection end and a second connection end that are opposite each other.

An end surface of the second transmission shaft towards the guider is provided with a first insertion hole extending in an axial direction of the second transmission shaft. The first connection end of the torsion bar is inserted into the first insertion hole, enabling the torsion bar to rotate together with the second transmission shaft.

An end surface of the guider towards the second transmission shaft is provided with a second insertion hole extending in an axial direction of the guider. The second connection end of the torsion bar is inserted into the second insertion hole, enabling the torsion bar to rotate together with the guider.

Optionally, a third bearing is between the second transmission shaft and the guider. The second transmission shaft and the guider are rotatable relative to each other.

Optionally, the steer-by-wire column includes a sensor sleeving the second transmission shaft. The sensor is connected to the controller.

Optionally, the sensor, the angle limiting mechanism, the feedback actuator and the controller are coaxially arranged.

Optionally, the steer-by-wire column includes a connecting wire harness. The sensor and the controller are provided with sockets, respectively. Insertion members at two ends of the connecting wire harness are inserted into corresponding sockets in a matched manner, respectively.

Optionally, the column housing has a first end surface used for being connected to the column sleeve and a second end surface used for being connected to the feedback actuator.

The first end surface is provided with a plurality of first fastening holes. An end surface of the column sleeve is provided with a plurality of second fastening holes. The column sleeve and the column housing are connected to each other through first fasteners penetrating the first fastening holes and the second fastening holes.

And/or, the second end surface is provided with a plurality of third fastening holes. An end surface of the feedback actuator is provided with a plurality of fourth fastening holes. The column housing and the feedback actuator are connected to each other through second fasteners penetrating the third fastening holes and the fourth fastening holes.

And/or, the column housing is provided with a plurality of connecting arms arranged on an outer peripheral wall of the column housing and arranged at intervals in a circumferential direction. The connecting arms are provided with mounting holes used for fixing the steering column.

Optionally, a fourth bearing is between the guider and the column housing. The guider and the column housing are rotatable relative to each other.

Optionally, an end of the output shaft is fixedly provided with a first coupler. An end surface of the guider towards the output shaft is fixedly provided with a second coupler. The first coupler and the second coupler are connected to each other, and damping block is filled between the first coupler and the second coupler.

A second aspect of embodiments of the present invention provides a steer-by-wire system. The steer-by-wire system includes:
a steering wheel;
the steer-by-wire column, where a steering column in the steer-by-wire column is connected to the steering wheel; and
a steering gear used for driving a steerable wheel to steer, where the steering gear is connected to the steer-by-wire column in a communication manner.

A third aspect of embodiments of the present invention provides a vehicle. The vehicle includes the steer-by-wire system.

The technical solution provided by the embodiments of the present invention can have the following beneficial effects: in the steer-by-wire column provided by the present invention, the guider is connected between the output shaft of the feedback actuator and the column rotating shaft. When the column rotating shaft or the output shaft rotates, the guider may rotate accordingly. For instance, when the guider rotates along with the column rotating shaft, the limiting pin may move relative to the cover under the pushing action of the guiding track, and rotation of the guider may be converted into linear motion of the limiting pin. When the guider rotates clockwise and the limiting pin moves to a tail end of the guiding track, or when the guider rotates counterclockwise and the limiting pin moves to the other tail end of the guiding track, the guider cannot further rotate, the column rotating shaft stops rotating, and the steering wheel is limited accordingly, such that mechanical limiting is implemented. In this way, a driver can be prevented from further rotating the steering wheel, and a rotation angle range of the steering wheel can be designed through the design of the guiding track.

It should be understood that the above general description and the following detailed description are merely illustrative and explanatory, instead of limiting the present invention.

### BRIEF DESCRIPTION OF DRAWINGS

The accompanying drawings here, incorporated in the description as a constituent part of the description, illustrate embodiments conforming to the present invention, and serve to describe principles of the present invention together with the description.
FIG. 1 is a schematic diagram of a steer-by-wire system according to an example;
FIG. 2 and FIG. 3 are perspective views of a steer-by-wire column according to an example at different viewing angles;
FIG. 4 is an exploded view of a steer-by-wire column according to an example;
FIG. 5 is a front view of a steer-by-wire column according to an example; and
FIG. 6 is a cutaway view along A-A in FIG. 5.

Description of reference numerals
100-steer-by-wire column; 1-steering column; 10-column housing; 1001-first end surface; 1002-second end surface; 11-column rotating shaft; 111-first transmission shaft; 1110-stop part; 1111-expansion section; 112-second transmission shaft; 1120-first insertion hole; 12-column sleeve; 121-matching end; 122-second fastening hole; 123-first fastener; 13-clamp ring; 14-torsion bar; 141-first connection end; 142-second connection end; 101-first end; 102-second end; 103-first fastening hole; 104-third fastening hole; 105-connecting arm; 106-mounting hole; 107-second fastener; 2-sensor; 21-first bearing; 22-second bearing; 23-third bearing; 24-fourth bearing; 3-feedback actuator; 31-output shaft; 32-fourth fastening hole; 4-controller; 40-socket; 5-angle limiting mechanism; 51-guider; 510-second insertion hole; 511-guiding track; 52-cover; 521-guiding recess; 53-limiting pin; 531-stop slider; 6-connecting wire harness; 61-insertion member; 91-first coupler; 92-second coupler; 93-damping block; 200-steering wheel; 300-steering gear; 400-steerable wheel; 900-steer-by-wire system, P1-a first limit position; P2-second limit position.

### DETAILED DESCRIPTION OF THE INVENTION

Examples will be described in detail here and shown in the accompanying drawings illustratively. When the following description involves the accompanying drawings, unless otherwise specified, an identical number in different accompanying drawings denotes identical or similar elements. Implementations described in the following examples do not denote all implementations consistent with the present invention. On the contrary, the implementations are merely instances of a device and a method consistent with some aspects of the present invention as detailed in the appended claims.

In the present invention, in a case without contrary explanations, directional words such as "axial" and "circumferential" is generally relative to a rotation axis of a steering column in a case of normally mounting a steer-by-wire column provided by the present invention. According to the specific context, "inside" and "outside" may refer to inside and outside of an outline of a corresponding component or inside or outside of the environment where it is located. In addition, when the following description involves the accompanying drawings, unless otherwise specified, an identical number in different accompanying drawings denotes identical or similar elements. The terms such as "first" and "second" used in the present invention are used for distinguishing one element from another, instead of indicating sequences and importance.

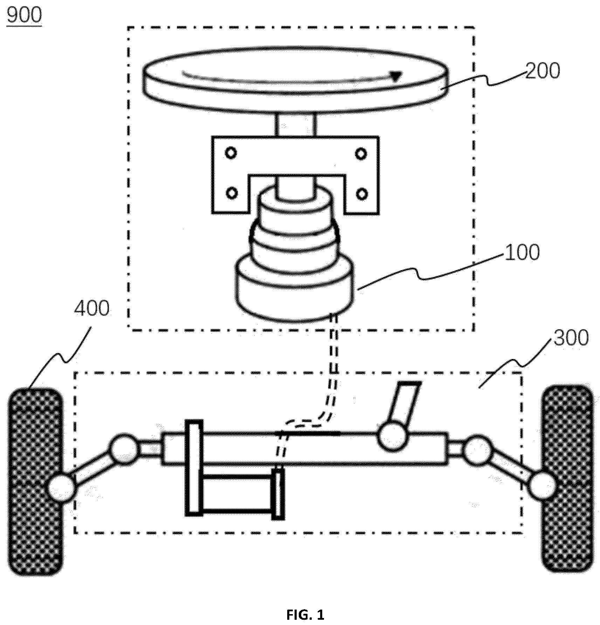

As shown in FIG. 1, a steer-by-wire system 900 includes a steer-by-wire column 100 in a cab and a steering gear 300 on a chassis. The steer-by-wire column 100 is used for being connected to a steering wheel 200. The steer-by-wire column 100 and the steering gear 300 are not connected to each other through a mechanical or hydraulic structure, and are connected in a communication manner (which is indicated by dotted lines in the figure).

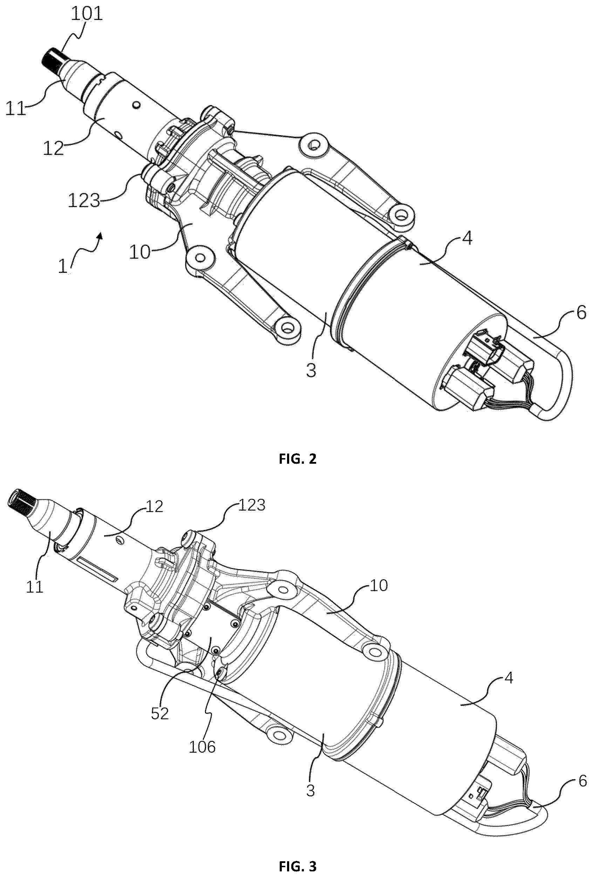

As shown in FIG. 2 and FIG. 3, the steer-by-wire column 100 includes a steering column 1, a feedback actuator 3, and a controller 4. In the steer-by-wire system, a steering command of a driver may be received through rotation of the steering wheel 200, and may be converted into a rotation angle and/or torque information of the steering column 1 and transmitted to the controller 4. An electric signal generated by the controller 4 may be output to the steering gear 300, such that wheels are driven to generate corresponding steering angles. Further, in order to generate a real driving feel, parameter information such as vehicle speed, steering angle and torque in an actual driving state is fed back to the feedback actuator 3 through the controller 4, and the feedback actuator 3 couples the parameter information to the steering wheel 200 through the steering column 1. In this way, the driver can obtain a road feel, and a real driving experience similar to that of traditional mechanical connection can be provided.

In the steer-by-wire system, with communication connection instead of mechanical connection, the steering column 1 may rotate indefinitely, and the steering column 1 has no function of limiting a rotation angle. If road feel information is not transmitted in time, possible danger is caused.

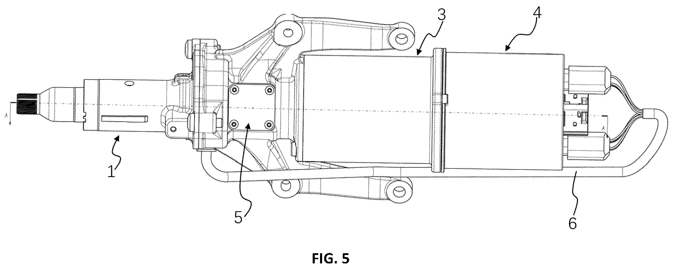

In view of that, as shown in FIG. 2 to FIG. 6, the present invention provides a steer-by-wire column. The steer-by-wire column 100 includes a steering column 1, a feedback actuator 3, a controller 4, and an angle limiting mechanism 5. The steering column 1 includes a column housing 10 and a column rotating shaft 11 rotatably arranged in the column housing 10, and a first end 101 of the column rotating shaft 11 is configured to be connected to a steering wheel 200. An output shaft 31 of the feedback actuator 3 is connected to the column rotating shaft 11 in a transmission manner, and the column housing 10 is mounted on an end surface of the feedback actuator 3. The controller 4 is connected to the feedback actuator 3 and a steering gear 300 of a vehicle separately. The angle limiting mechanism 5 includes a guider 51 arranged in the column housing 10, a cover 52 arranged on the column housing 10, and a limiting pin 53, and the guider 51 is rotatably connected between the output shaft 31 and a second end 102 of the column rotating shaft 11. One end of the limiting pin 53 is arranged in a guiding track 511 of the guider 51, and the other end of the limiting pin is movably mounted on the cover 52. The feedback actuator 3 or the column rotating shaft 1 is configured to drive the guider 51 to rotate, causing the limiting pin 53 to move between a first limit position P1 and a second limit position P2 to limit a rotation angle of the steering wheel 200.

Here, it should be noted that the feedback actuator 3 may be an electric motor, and the first limit position P1 and the second limit position P2 correspond to two ends of the guiding track 511, respectively. The first limit position P1 is a left end of the guiding track 511 to which the limiting pin 53 moves when the guider 51 rotates clockwise. The second limit position P2 is a right end of the guiding track 511 to which the limiting pin 53 moves when the guider 51 rotates counterclockwise. At the two limit positions (i.e., first limit position P1 and second limit position P2), the guider cannot further rotate due to a stop effect of an end of the guiding track 511 on the limiting pin 53.

In the steer-by-wire column 100 provided by the present invention, the guider 51 is connected between the output shaft 31 of the feedback actuator 3 and the column rotating shaft 11. When the column rotating shaft 11 or the output shaft 31 rotates, the guider 51 may rotate accordingly. For instance, when the guider 51 rotates along with the column rotating shaft 11, the limiting pin 53 may move relative to the cover 52 under the pushing action of the guiding track 511, and rotation of the guider 51 may be converted into linear motion of the limiting pin 53. When the guider 51 rotates clockwise and the limiting pin 53 moves to a tail end of the guiding track 511, or when the guider 51 rotates counterclockwise and the limiting pin 53 moves to the other tail end of the guiding track 511, the guider cannot further rotate, the column rotating shaft 11 stops rotating, and the steering wheel 200 is limited accordingly, such that mechanical limiting is implemented. In this way, a driver can be prevented from further rotating the steering wheel 200. The angle limiting mechanism 5 can limit a rotation angle of the steering wheel 200. A rotation angle range of the steering wheel 200 can be designed through the design of the guiding track 511.

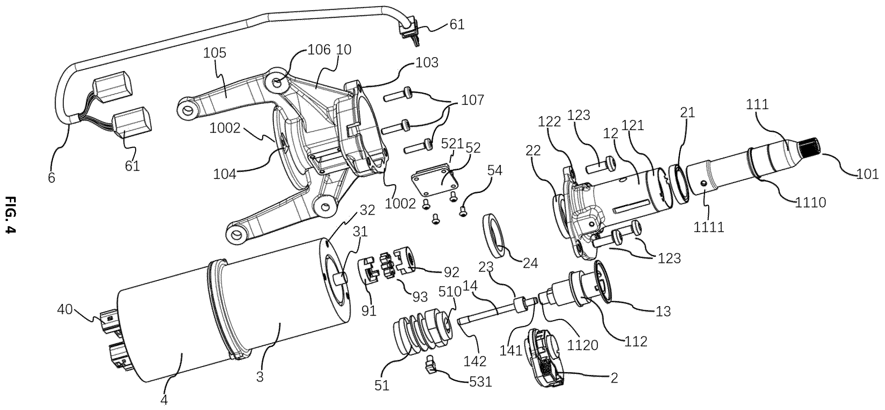

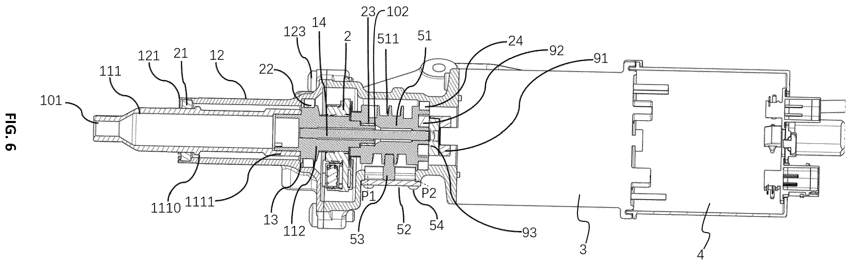

As shown in FIG. 4 and FIG. 6, the guiding track 511 may be a spiral track arranged on an outer peripheral wall of the guider 51. A rotation direction of the spiral track is arranged around an axial direction of the column rotating shaft 11. The overall linear extension direction of the spiral track in a direction of rotation is parallel to the axial direction of the column rotating shaft 11. Two ends of the spiral track are the first limit position P1 and the second limit position P2, respectively. The first limit position P1 and the second limit position P2 are limit positions of clockwise and counterclockwise rotation of the guider 51, respectively. By designing a number of turns of the spiral track, different maximum steering angle requirements of the steering wheel can be achieved.

The cover 52 is provided with a guiding recess 521. As shown in FIG. 4, one end of the limiting pin 53 is provided with a stop slider 531. The stop slider 531 is slidably arranged in the guiding recess 521. An extension direction of the guiding recess 521 is arranged in parallel with the axial direction of the column rotating shaft 11 (i.e., the overall linear extension direction of the spiral track in a direction of rotation). Rotation of the guider 51 is converted into linear motion of the limiting pin 53, such that the limiting pin 53 cannot be stuck during movement, and is limited at the two limit positions. Clearly, the guiding track 511 and the guiding recess 521 are not limited to shapes and arrangement shown in the embodiments in the figures. In other embodiments, the guiding track 511 may be an arcshaped guiding track extending in an axial direction, which falls within the protection scope of the present invention.

The column rotating shaft 11 may be a shaft. In the present invention, as shown in FIG. 6, the column rotating shaft 11 includes a first transmission shaft 111 and a second transmission shaft 112 that are connected. The steering column 1 further includes the column sleeve 12 connected to the column housing 10. The column sleeve 12 sleeves the first transmission shaft 111 by a first bearing 21, such that the first transmission shaft 111 is rotatable relative to the column sleeve 12. The column sleeve 12 sleeves the second transmission shaft 112 by a second bearing 22, such that the second transmission shaft 112 is rotatable relative to the column sleeve 12. The first transmission shaft 111 is partially rotatably located in the column sleeve 12, and the second transmission shaft 112 and the guider 51 are rotatably located in the column housing 10. Thus, the column rotating shaft 11 is rotatable in the column sleeve 12 and the column housing 10. Torque output by the feedback actuator 3 can be transmitted to the column rotating shaft 11, and further to the steering wheel 200. Further, rotation of the steering wheel 200 can be transmitted to the column rotating shaft 11, and then a sensor 2 arranged on the column rotating shaft 11 can obtain torque or rotational speed information of the column rotating shaft 11, which are transmitted to the controller 4 and the steering gear 300 sequentially.

In order to fix a position of the column rotating shaft 11 in the axial direction and prevent the column rotating shaft from moving in the axial direction, in the present invention, the column sleeve 12 may be fixedly connected to a vehicle combination switch through a matching end 121. As shown in FIG. 6, an outer wall of the first transmission shaft 111 is provided with a stop part 1110, and the first bearing 21 is fixedly arranged between the matching end 121 of the column sleeve 12 and the stop part 1110. And/or, the second bearing 22 sleeves an outer peripheral wall of the second transmission shaft 112 and is fixed by a clamp ring 13. In this way, the column rotating shaft 11 is only rotatable in the circumferential direction without moving in the axial direction.

There are various ways of connecting the first transmission shaft 111 and the second transmission shaft 112. An end of the first transmission shaft 111 extends out of the column sleeve 12 to form the first end 101. The first end 101 is connected to the steering wheel 200. An end of the second transmission shaft 112 farther from the first transmission shaft 111 is formed into the second end 102. The second end 102 is connected to the guider 51 in a transmission manner. A connection end of the first transmission shaft 111 farther from the first end 101 is provided with an expansion section 1111. A connection end of the second transmission shaft 112 farther from the second end 102 is pressed into the expansion section 1111 in an interference manner. The first transmission shaft 111 and the second transmission shaft 112 are connected to each other through interference pressing to implement synchronous rotation. In other examples, the first transmission shaft and the second transmission shaft may be connected through welding, coupler connection, pin connection, etc.

In order to implement transmission connection between the column rotating shaft 11 and the guider 51, in the present invention, the steering column 1 includes a torsion bar 14. The torsion bar 14 is provided with a first connection end 141 and a second connection end 142 that are opposite each other. An end surface of the second transmission shaft 112 towards the guider 51 is provided with a first insertion hole 1120 extending in an axial direction of the second transmission shaft. The first connection end 141 of the torsion bar 14 is inserted into the first insertion hole 1120, enabling the torsion bar 14 to rotate together with the second transmission shaft 112. An end surface of the guider 51 towards the second transmission shaft 112 is provided with a second insertion hole 510 extending in an axial direction of the guider. The second connection end 142 of the torsion bar 14 is inserted into the second insertion hole 510, enabling the torsion bar 14 to rotate together with the guider 51. The first connection end 141 and the second connection end 142 of the torsion bar 14 may be provided with spline-connection structures. The first connection end 141 and the second connection end 142 are spline-connected to the first insertion hole 1120 and the second insertion hole 510, respectively. In this way, torque of the output shaft 31 can be transmitted to the second transmission shaft 112 through the torsion bar 14, and transmitted to the first transmission shaft 111 and the steering wheel 200. Additionally, torque of the second transmission shaft 112 may be transmitted to the guider 51 through the torsion bar 14.

On one hand, the guider 51 is connected to the output shaft 31 of the feedback actuator 3. On the other hand, the guider is connected to the second transmission shaft 112 through the torsion bar 14. Thus, torque can be output to the guider 51 from two ends of the guider 51. In the present invention, a third bearing 23 is arranged between the second transmission shaft 112 and the guider 51, and the second transmission shaft 112 and the guider 51 may rotate relatively to ensure smooth rotation at a joint position of the second transmission shaft 112 and the guider 51.

A fourth bearing 24 is arranged between the guider 51 and the column housing 10. The guider 51 and the column housing 10 are rotatable relative to each other, so as to ensure smooth rotation of the guider 51 in the column housing 10.

The steer-by-wire column 100 includes a sensor 2 sleeving the second transmission shaft 112, and the sensor 2 is connected to the controller 4. The sensor 2 may be used for obtaining information such as rotation angle, rotation speed and torque of the second transmission shaft 112. The sensor may be a sensor independently used for angle measurement, a sensor independently used for rotational speed measurement, a sensor independently used for torque measurement, or a sensor including an angle measurement module, a rotational speed measurement module and a torque measurement module, which is not limited by the present invention. In the present invention, the sensor 2 is arranged on the second transmission shaft 112 and in the column housing 10. A housing of the sensor 2 and the column housing 10 are designed in an integrated manner. An insertion port of the sensor 2 may be directly provided on the column housing 10. In other embodiments, the sensor 2 may be arranged on the first transmission shaft 111.

In the present invention, as shown in FIG. 6, the sensor 2, the angle limiting mechanism 5, the feedback actuator 3 and the controller 4 are coaxially arranged. In the related technical solution, a worm gear reduction mechanism is arranged between the steering column and the feedback actuator to transmit torque, and a worm gear and the output shaft of the feedback actuator are arranged non-coaxially. Compared with that, in the steer-by-wire column 100 provided by the present invention, the column rotating shaft 11, the sensor 2 arranged on the column rotating shaft 11, the feedback actuator 3, the controller 4 and the angle limiting mechanism 5 are coaxially arranged, such that the steer-by-wire column 100 is more compact in structure and smaller in size, and can be arranged in a compact space more easily, and for instance, can be applied to vehicles with compact arrangement space more easily. In addition, in the present invention, axial positions of the sensor 2, the angle limiting mechanism 5, the feedback actuator 3 and the controller 4 are sequentially set, and may specifically be adjusted and set as required.

As shown in FIG. 4, the steer-by-wire column 100 further includes a connecting wire harness 6. The sensor 2 and the controller 4 are provided with sockets 40, respectively. Insertion members 61 at two ends of the connecting wire harness 6 are inserted into the corresponding sockets 40 in a matched manner, respectively. The sensor 2 sleeves the second transmission shaft 112. The sockets 40 of the sensor 2 are integrated to the column housing 10. The connecting wire harness 6 is connected to the sensor 2 and the controller 4 separately through the insertion members 61 at two ends. In other embodiments, the sensor 2 and the controller 4 may connected in a communication manner, and fall within the protection scope of the present invention.

In order to stably connect the guider 51 to the output shaft 31 of the feedback actuator 3, an end of output shaft 31 is fixedly provided with a first coupler 91, an end surface of the guider 51 towards the output shaft 31 is fixedly provided with a second coupler 92, the first coupler 91 and the second coupler 92 are connected to each other, and damping block 93 is filled between the first coupler and the second coupler. The first coupler 91 may be pressed into the guider 51 to achieve fixed connection. The second coupler 92 may be pressed into the output shaft 31 of the feedback actuator 3 to achieve fixed connection. The damping block 93 is filled between the first coupler 91 and the second coupler 92, such that power of the output shaft 31 may be stably transmitted to the guider 51.

The present invention designs a structure of the column housing 10. As shown in FIG. 4, the column housing 10 has a first end surface 1001 used for being connected to the column sleeve 12 and a second end surface1002 used for being connected to the feedback actuator 3. The guider 51 and the second transmission shaft 112 are rotatably mounted in a cavity between the first end surface 1001 and the second end surface 1002of the column housing 10. The first end surface 1001 is provided with a plurality of first fastening holes 103, and an end surface of the column sleeve 12 is provided with a plurality of second fastening holes 122. The column sleeve 12 and the column housing 10 are connected to each other through first fasteners 123 penetrating the first fastening holes 103 and the second fastening holes 122. Three first fastening holes 103, three second fastening holes 122 and three first fasteners 123 may be provided to fix the column sleeve 12 to the column housing 10. An end for being connected to the second end surface of the column sleeve 12 is provided with a flange. The plurality of second fastening holes 122 are provided on the flange.

In the present invention, the second end surface 1002 of the column housing 10 is provided with a plurality of third fastening holes 104. An end surface of the feedback actuator 3 is provided with a plurality of fourth fastening holes 32. The column housing 10 and the feedback actuator 3 are connected to each other through second fasteners 107 penetrating the third fastening holes 104 and the fourth fastening holes 32. Three third fastening holes 104, three fourth fastening holes 32 and three the second fasteners 107 may be provided to stably fix the column housing 10 to the feedback actuator 3.

In addition, the column housing 10 is provided with a plurality of connecting arms 105 arranged on an outer peripheral wall and arranged at intervals in a circumferential direction. The connecting arms 105 are provided with mounting holes 106 used for fixing the steering column 1. The two connecting arms 105 may be arranged in parallel, and may fix the column housing 10 to a proper position in a cab.

A second aspect of the present invention provides a steer-by-wire system. The steer-by-wire system includes a steering wheel 200, the steer-by-wire column 100 described above, and a steering gear 300. A steering column 1 in the steer-by-wire column 100 is connected to the steering wheel 200. The steering gear 300 is used for driving a steerable wheel to steer. The steering gear 300 is connected to the steer-by-wire column 100 in a communication manner. A controller 4 is connected to a sensor 2, the steering gear 300 and a feedback actuator 3, and steering torque of the steerable wheel can be fed back to the steering wheel 200. Thus, a driver can obtain a road feel, a steering command of the driver can be transmitted to the steering gear 300, and the steerable wheel can generate a corresponding steering angle.

A third aspect of the present invention provides a vehicle. The vehicle includes the steer-by-wire system. The vehicle has all the beneficial effects of the steer-by-wire system, which will not be repeated here.

In the detailed description, reference is made to the accompanying drawings, and specific aspects of the present invention may be implemented as shown in the drawings. In view of that, terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential" can be used for indicating directions or expressing positional relationships with reference to orientations of the described figures. Since components of the described device can be positioned in a number of different orientations, directional terms can be used for illustrative purposes rather than limiting. It should be understood that other aspects can be used and structural or logical changes can be made without departing from the concepts of the present invention. Thus, the following detailed description should not be regarded as limitative.

It should be understood that features of various embodiments of the present invention described here can be combined with each other unless otherwise specified. As used here, the term "and/or" includes any one of related listed items and any combination of any two or more of related listed items. Similarly, "at least one of ..." includes any one of related listed items and any combination of any two or more of related listed items.

It should be understood that, unless expressly specified and defined otherwise, the terms "bond," "attach," "mount," "connect," "connection," and "fix" used in the embodiments of the present invention are to be construed broadly. For instance, they can denote fixed connection, detachable connection or integral connection, denote mechanical connection, electric connection or communication, denote direct connection or indirect connection through an intermediate medium, or denote communication between interiors of two elements or interaction between two elements, unless expressly specified. For those of ordinary skill in the art, specific meanings of the terms in the present invention may be understood according to specific circumstances.

In addition, the word "over" used in a component, element or material layer that is formed "over" or located "over" a surface may be used here to mean that a component, element or material layer is "indirectly" positioned (for instance, placed, formed, deposited, etc.) on the surface, such that one or more additional components, elements or layers are arranged between the surface and the component, element or material layer. However, the word "over" used in a component, element or material layer that is formed "over" or located "over" a surface may have specific meanings In some possible examples as follows: a component, element or material layer is "directly" positioned (for instance, placed, formed, deposited, etc.) on the surface, and for instance, is in direct contact with the surface.

Although the terms such as "first," "second," and "third" can be used here to describe various members, components, zones, layers or sections, the members, components, zones, layers or sections are not limited to the terms. On the contrary, the terms are only used for distinguishing one member, component, zone, layer or section from another member, component, zone, layer or section. Thus, a first member, component, zone, layer or section mentioned in the instances described here can also be referred to as a second member, component, zone, layer or section without departing from the teaching of each instance. In addition, terms "first" and "second" are merely for descriptive purposes and are not to be construed as indicating or implying their relative importance or implicitly specifying the number of indicated technical features. Thus, a feature defined with "first" and "second" can explicitly or implicitly include at least one of the features. In the description, "a plurality of" indicates at least two, and for instance, two or three, unless expressly specified otherwise.

It should be understood that spatially relative terms such as "above," "upper portion," "below" and "lower portion" are used here to describe a relationship between one element shown in the figure and another. The spatial relative terms are intended to include different orientations of the device during use or operation in addition to the orientations described in the accompanying drawings. For instance, if the device in the drawing is turned over, an element described as "above" or located at an "upper portion" with respect to another element may be located "below" or at a "lower portion" of another element. Thus, according to spatial orientations of the device, the term "above" includes upper and lower orientations. The device may be oriented in another manner (for instance, rotated by 90 degrees or at another orientation), and the relative spatial terms used here may be explained accordingly.

Further, the word "illustrative" is used here to indicate an illustrative instance, an instance, and a diagram. Any aspect or design described here as "illustrative" is not necessarily understood as advantageous over other aspects or designs. On the contrary, words are used to illustratively present concepts in a concrete way. As used here, the term "or" is intended to indicate inclusive "or" rather than exclusive "or". That is, unless otherwise specified or clear from the context, "X is applied to A or B" is intended to indicate any one of natural inclusive arrangements. That is, if X is applied to A, X is applied to B, or X is applied to both A and B, "X is applied to A or B" satisfies any one of the above instances. In addition, the articles "a," "an" and "one" as used in the present invention and the appended claims are generally understood to indicate "one or more" unless otherwise specified or clearly pointed out from the context.

Likewise, although the present invention is shown and described with respect to one or more implementations, those skilled in the art could conceive of equivalent variations and modifications after reading and understanding the description and the accompanying drawings. The present invention includes all such modifications and variations, and is limited only by the scope of the claims. Particularly, for various functions executed by the components (for instance, elements, resources, etc.), unless otherwise indicated, the terms used to describe such components are intended to correspond to any component (functionally equivalent) that executes a specified function of the described component, even if the component is not structurally equivalent to the disclosed structure. In addition, although a particular feature of the present invention can be disclosed with respect to only one of several implementations, such a feature can be combined with one or more other features of other implementations as desired and advantageous for any given or specific application. Further, the terms "include," "comprise," "have," "with," or their variations used in specific implementations or claims are intended to be inclusive like the term "encompass".

It should be understood that the present invention is not limited to a precise structure described above and illustrated in the accompanying drawings, and can be subjected to various modifications and changes without departing from the scope. The scope of the present invention is limited merely by the appended claims.

## Claims

1. A steer-by-wire column (100), comprising:
a steering column (1) comprising a column housing (10) and a column rotating shaft (11) rotatably arranged in the column housing (10), wherein a first end (101) of the column rotating shaft (11) is configured to be connected to a steering wheel (200);
a feedback actuator (3), wherein an output shaft (31) of the feedback actuator (3) is connected to the column rotating shaft (11) in a transmission manner, and the column housing (10) is on an end surface of the feedback actuator (3);
a controller (4) connected to the feedback actuator (3) and a steering gear (300) of a vehicle separately; and
an angle limiting mechanism (5) comprising a guider (51) arranged in the column housing (10), a cover (52) arranged on the column housing (10), and a limiting pin (53), wherein the guider (51) is rotatably connected between the output shaft (31) and a second end (102) of the column rotating shaft (11), one end of the limiting pin (53) is in a guiding track (511) of the guider (51), the other end of the limiting pin (53) is movably mounted on the cover (52), and the feedback actuator (3) or the column rotating shaft (11) is configured to drive the guider (51) to rotate, causing the limiting pin (53) to move between a first limit position (P1) and a second limit position (P2) to limit a rotation angle of the steering wheel (200).

2. The steer-by-wire column (100) according to claim 1, wherein the guiding track (511) is a spiral track arranged on an outer peripheral wall of the guider (51), a rotation direction of the spiral track is around an axial direction of the column rotating shaft (11), and two ends of the spiral track are the first limit position (P1) and the second limit position (P2), respectively.

3. The steer-by-wire column (100) according to claim 2, wherein the cover (52) is provided with a guiding recess (521), one end of the limiting pin (53) is provided with a stop slider (531), and the stop slider (531) is slidably arranged in the guiding recess (521), wherein an extension direction of the guiding recess (521) is in parallel with the axial direction of the column rotating shaft (11).

4. The steer-by-wire column (100) according to any one of claims 1-3, wherein the column rotating shaft (11) comprises a first transmission shaft (111) and a second transmission shaft (112) connected to each other, and the steering column (1) further comprises a column sleeve (12) connected to the column housing (10);
the column sleeve (12) is sleeved on the first transmission shaft (111) by a first bearing (21), enabling the first transmission shaft (111) to rotate relative to the column sleeve (12); and
the column sleeve (12) is sleeved on the second transmission shaft (112) by a second bearing (22), enabling the second transmission shaft (112) to rotate relative to the column sleeve (12).

5. The steer-by-wire column (100) according to claim 4, wherein the steer-by-wire column (100) comprises at least one of the following:
an outer wall of the first transmission shaft (111) is provided with a stop part (1110), and the first bearing (21) is fixedly arranged between a matching end (121) of the column sleeve (12) and the stop part (1110); or
the second bearing (22) is sleeved on an outer peripheral wall of the second transmission shaft (112) and is fixed by a clamp ring (13).

6. The steer-by-wire column (100) according to claim 4, wherein an end of the first transmission shaft (111) extends out of the column sleeve (12), to form the first end (101), an end of the second transmission shaft (112) farther from the first transmission shaft (111) is formed into the second end (102), a connection end of the first transmission shaft (111) farther from the first end (101) is provided with an expansion section (1111), and a connection end of the second transmission shaft (112) farther from the second end (102) is pressed into the expansion section (1111) in an interference manner.

7. The steer-by-wire column (100) according to claim 4, wherein the steering column (1) comprises a torsion bar (14), and the torsion bar (14) is provided with a first connection end (141) and a second connection end (142), which are opposite each other;
an end surface of the second transmission shaft (112) towards the guider (51) is provided with a first insertion hole (1120) extending in an axial direction of the second transmission shaft (112), the first connection end (141) of the torsion bar (14) is inserted into the first insertion hole (1120), enabling the torsion bar (14) to rotate together with the second transmission shaft (112); and
an end surface of the guider (51) towards the second transmission shaft (112) is provided with a second insertion hole (510) extending in an axial direction of the guider (51), the second connection end (142) of the torsion bar (14) is inserted into the second insertion hole (510), enabling the torsion bar (14) to rotate together with the guider (51),
optionally, a third bearing (23) is between the second transmission shaft (112) and the guider (51), and the second transmission shaft (112) and the guider (51) are rotatable relative to each other.

8. The steer-by-wire column (100) according to any one of claims 4 to 7, wherein the steer-by-wire column (100) comprises a sensor (2) sleeving the second transmission shaft (112), and the sensor (2) is connected to the controller (4).

9. The steer-by-wire column (100) according to claim 8, wherein the sensor (2), the angle limiting mechanism (5), the feedback actuator (3), and the controller (4) are coaxially arranged.

10. The steer-by-wire column (100) according to claim 8, wherein the steer-by-wire column (100) comprises a connecting wire harness (6), the sensor (2) and the controller (4) are provided with sockets (40), respectively, and insertion members (61) at two ends of the connecting wire harness (6) are inserted into corresponding sockets (40) in a matched manner, respectively.

11. The steer-by-wire column (100) according to any one of claims 4-10, wherein the column housing (10) has a first end surface (1001) for being connected to the column sleeve (12) and a second end surface (1002) for being connected to the feedback actuator (3), wherein the steer-by-wire column (100) comprises at least one of the following:
the first end surface (1001) is provided with a plurality of first fastening holes (103), an end surface of the column sleeve (12) is provided with a plurality of second fastening holes (122), and the column sleeve (12) and the column housing (10) are connected to each other through first fasteners (123) penetrating the first fastening holes (103) and the second fastening holes (122);
the second end surface (1002) is provided with a plurality of third fastening holes (104), an end surface of the feedback actuator (3) is provided with a plurality of fourth fastening holes (32), and the column housing (10) and the feedback actuator (3) are connected to each other through second fasteners (107) penetrating the third fastening holes (104) and the fourth fastening holes (32); or,
the column housing (10) is provided with a plurality of connecting arms (105) arranged on an outer peripheral wall of the column housing (10) and arranged at intervals in a circumferential direction, and the connecting arms (105) are provided with mounting holes (106) used for fixing the steering column (1).

12. The steer-by-wire column (100) according to claim 1, wherein a fourth bearing (24) is between the guider (51) and the column housing (10), and the guider (51) and the column housing (10) are rotatable relative to each other.

13. The steer-by-wire column (100) according to claim 1, wherein an end of the output shaft (31) is fixedly provided with a first coupler (91), an end surface of the guider (51) towards the output shaft (31) is fixedly provided with a second coupler (92), the first coupler (91) and the second coupler (92) are connected to each other, and a damping block (93) is filled between the first coupler and the second coupler.

14. A steer-by-wire system (900), comprising:
a steering wheel (200);
the steer-by-wire column (100) according to any one of claims 1 to 13, wherein a steering column (1) in the steer-by-wire column (100) is connected to the steering wheel (200); and
a steering gear (300) used for driving a steerable wheel (400) to steer, wherein the steering gear (300) is connected to the steer-by-wire column (100) in a communication manner.

15. A vehicle, comprising the steer-by-wire system according to claim 14.
